**Europäisches Patentamt**

**European Patent Office**

**Office européen des brevets**

(11) Numéro de publication: **0 198 732**
**A1**

## (12) DEMANDE DE BREVET EUROPEEN

(21) Numéro de dépôt: **86400489.0**

(22) Date de dépôt: **07.03.86**

(51) Int. Cl.4: **G01K 11/24** , G01K 13/02

(30) Priorité: **19.03.85 FR 8504035**

(43) Date de publication de la demande:
**22.10.86 Bulletin 86/43**

(84) Etats contractants désignés:
**BE CH DE GB IT LI SE**

(71) Demandeur: **Framatome**
**Tour Fiat 1 place de la Coupole**
**F-92400 Courbevoie(FR)**

(72) Inventeur: **Bru, Philippe**
**1 rue des Mouettes**
**F-77200 Croissy-Beaubourg(FR)**
Inventeur: **Marini, Jean**
**Chemin du Bois Martin**
**F-78160 Marly Le Roi(FR)**

(74) Mandataire: **Moncheny, Michel et al**
**c/o Cabinet Lavoix 2 Place d'Estienne**
**d'Orves**
**F-75441 Paris Cedex 09(FR)**

(54) **Procédé de mesure de la température d'un fluide dans une enceinte à l'aide d'une onde ultrasonore et dispositif pour la mise en oeuvre de ce procédé.**

(57) On émet une onde ultrasonore depuis l'extérieur de l'enceinte (10) et on provoque la propagation de cette onde ultrasonore à travers les parois de l'enceinte et à travers le fluide (11) contenu dans cette enceinte. On capte en un point de captage déterminé, à l'extérieur de l'enceinte, l'onde (1) transmise directement à travers l'enceinte et à travers le fluide, et l'onde (2) transmise après réflection. On détermine l'intervalle de temps séparant la réception au point de captage de l'onde transmise directement, de la réception au point de captage de l'onde transmise après réflection, et on déduit la valeur de la température du fluide, de la valeur de l'intervalle de temps, de la longueur du parcours dans le fluide et de la connaissance de la variation de la vitesse du son dans le fluide.

L'invention s'applique, en particulier, à la surveillance thermique des réacteurs nucléaires.

FIG.1

# Procédé de mesure de la température d'un fluide dans une enceinte àl'aide d'une onde ultrasonore et dispositif pour la mise en oeuvre de ce procédé

La présente invention a pour objet un procédé de détermination, par mesure du temps de propagation d'une onde ultrasonore, de la température d'un fluide dans une enceinte.

Dans un réacteur nucléaire à eau sous pression, ou dans une installation industrielle quelconque comportant un grand nombre d'organes tels que des tuyauteries et des enceintes dans lesquelles des fluides sont en circulation, il est nécessaire de mesurer en permanence la température des fluides en circulation pour, par exemple, surveiller l'évolution de la température par rapport à une température moyenne idéale, et detecter toute elevation anormale.

Les méthodes les plus couramment employées jusqu'à présent, pour les mesures de température d'un fluide dans une enceinte, utilisent soit des thermocouples, soit des thermomètres, soit des sondes à résistance, ou soit encore des bilames.

L'emploi de ces différents moyens de mesure nécessite le montage de capteurs ou plongeurs directement à l'intérieur de l'enceinte, c'est-à-dire directement en contact avec le fluide, ce qui entraîne le perçage des parois de ladite enceinte.

Mais, du fait des contraintes d'origine thermique ou mécanique, il peut se produire, au niveau des capteurs, des ruptures locales plus ou moins complètes qui peuvent évoluer jusqu'au point où une pièce se détache et est entraînée par l'écoulement pour devenir un corps migrant dans l'installation. De plus, des fuites peuvent se produire au niveau du passage des capteurs à travers les parois de l'enceinte, à cause de la pression régnant à l'intérieur de cette enceinte.

Par ailleurs, l'emploi des sondes à résis tance, qui sont généralement utilisées dans les réacteurs nucléaires à eau sous pression, est délicat de par leur fragilité et leur temps de réponse important.

L'invention est basée sur le fait que la vitesse de propagation des ultrasons dans un fluide dépend de manière très sensible de sa température. Si l'on s'affranchit des paramètres autres que la température, la mesure du temps de transit d'une onde ultrasonore sur un trajet donné, permet de suivre les évolutions de la température du fluide dans la zone parcourue.

Dans ce but :

-on émet une onde ultrasonore depuis l'extérieur de l'enceinte,

-on provoque la propagation de cette ultrasonore vers une première partie de la paroi de l'enceinte, puis à travers cette première partie de l'enceinte, et enfin à travers le fluide contenu dans l'enceinte, jusqu'au moment où l'onde ultrasonore rencontre une seconde partie de la paroi de l'enceinte disposée en vis-à-vis de la première partie de la paroi,

-on capte, en un point de captage déterminé, à l'extérieur de l'enceinte, l'onde transmise directement à travers la seconde partie de la paroi,

-on capte, au même point de captage, l'onde transmise après au moins une réflection sur la face interne de la seconde partie de la paroi, une réflection sur la face interne de la première partie de la paroi et plusieurs traversées du fluide entre la première et la seconde parties de la paroi,

-on détermine l'intervalle de temps séparant la réception au point de captage de l'onde transmise directement, de la réception au point de captage de l'onde transmise après réflection,

-on déduit la valeur de la température du fluide, de la valeur de l'intervalle de temps, de la longueur du parcours dans le fluide et de la connaissance de la variation de la vitesse du son dans le fluide.

Afin de bien faire comprendre l'invention, on va décrire à titre d'exemple non limitatif, en se reportant aux figures jointes en annexe, un mode de réalisation du dispositif de mesure de la température d'un fluide dans une enceinte permettant de mettre en oeuvre le procédé suivant l'invention.

La Fig. 1 représente une vue schématique du dispositif de mesure suivant l'invention, monté sur une enceinte.

La Fig. 2 représente le chronogramme des échos ultrasonores.

La Fig. 3 représente le synoptique de l'ensemble de traitement pour l'informatique.

Les Fig. 4 et 5 représentent les différents blocs diagrammes de l'électronique associés aux couples émetteurs-récepteurs.

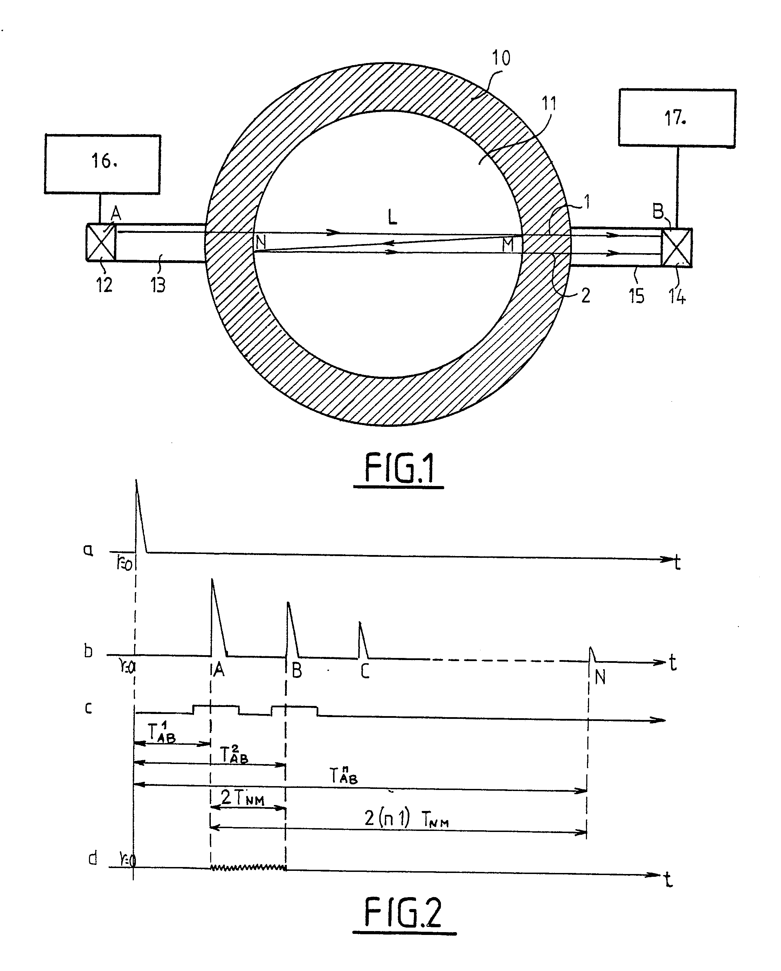

Sur la Fig. 1, on a représenté une enceinte 10 dans laquelle circule un fluide 11. Cette enceinte peut être constituée, par exemple, par une tuyauterie du circuit primaire d'une centrale nucléaire à eau sous pression, le fluide étant alors de l'eau.

A l'extérieur de l'enceinte 10, est monté un capteur piézoélectrique 12 que l'on appellera émetteur. Ce capteur 12 est associé avec un guide d'onde 13 soudé perpendiculairement à la paroi de ladite enceinte. En face de ce capteur émetteur 12 et à l'extérieur de l'enceinte 10 est monté un autre capteur piézoélectrique 14 que l'on appellera récepteur, associé également à un guide d'onde 15 soudé perpendiculairement à la paroi de l'enceinte.

La borne electrique du capteur emetteur 12 est connectée à un circuit d'émission 16, tandis que la borne électrique du capteur récepteur 14 est reliée à un circuit de réception 17.

L'onde ultrasonore émise par le circuit d'émission 16 et le capteur piézoélectrique 12 transite dans le guide d'onde 13, traverse une première partie de la paroi de l'enceinte 10, puis débouche à l'intérieur de l'enceinte dans une zone N.

Ensuite, l'onde ultrasonore se propage dans le liquide 11, jusqu'au moment où elle rencontre une seconde partie de la paroi de l'enceinte dans une zone M disposée en vis-à-vis de la zone N.

Une partie de l'onde ultrasonore traverse la paroi de l'enceinte 10 et le guide d'onde 15, puis est captée par le capteur récepteur 14, et transmise au circuit de réception 17. Ce parcours direct d'une partie de l'onde ultrasonore est indiqué par 1 sur la Fig. 1.

Du fait de la notable différence d'impédance acoustique de l'enceinte et du fluide, une grande partie de l'onde est réfléchie au niveau de la zone M à l'intérieur de l'enceinte 10. Cette partie de l'onde ultrasonore parcourt alors de nouveau le fluide 11 jusqu'à la zone N où elle se réfléchit de nouveau pour se propager vers le capteur recepteur 14. Ce parcours de l'onde ultrasonore est indiqué par 2 sur la Fig. 1.

La paroi interne de l'enceinte 10 se comportant comme un "miroir semi-réfléchissant", l'onde ultrasonore va effectuer un certain nombre d'allers et retours dans la ligne de mesure. Le capteur récepteur 14 va par conséquent mettre en évidence n trajets jus qu'à ce que les échos de réception correspondant à ces trajets voient leur amplitude, qui décroit de manière exponentielle, noyée dans le bruit de fond.

En considérant maintenant les temps de propagation de l'onde ultrasonore transitant du point d'émission A du capteur émetteur 12 au point de réception B du capteur récepteur 14, temps correspondant aux différents trajets définis précédemment, on a :

$$- \text{Trajet n}^\circ 1 : T^1_{AB} = T_{AN} + T_{NM} + T_{MB}$$
$$- \text{Trajet n}^\circ 2 : T^2_{AB} = T_{AN} + 3T_{NM} + T_{MB}$$
$$\vdots$$
$$- \text{Trajet n}^\circ n : T^n_{AB} = T_{AN} + (2n-1) T_{NM} + T_{MB}.$$

Afin de s'affranchir du temps de parcours dans les parois de l'enceinte et dans les guides d'onde - ($T_{AN}$ et $T_{MB}$), on considère uniquement l'intervalle de temps $\Delta T$ séparant la réception de l'écho "A" associé au trajet n° 1, de celle de l'écho "N" associé au trajet n° n :

$$\Delta T : T^n_{AB} - T^1_{AB} = 2(n-1)T_{NM}.$$

L'intervalle de temps $\Delta T$ représente le temps de parcours de l'onde ultrasonore sur 2 (n -1) trajet dans le milieu 11 à étudier.

On va maintenant se reporter à la Fig. 2 qui représente le chronogramme des échos ultrasonores. Le principe de la mesure repose sur la mesure du temps de l'onde ultrasonore et plus exactement sur la mesure du temps écoulé entre deux échos reçus par le circuit de réception 17. Les deux échos choisis pour déterminer le temps écoulé, sont d'une part le premier écho reçu et d'autre part un des échos suivant au choix de l'opérateur. Celui-ci choisira un écho dont l'amplitude reste suffisamment importante pour être exploitée par les systèmes électroniques de façon efficace.

En prenant pour origine des temps l'instant d'émission de l'onde ultrasonore, on a représenté sur la Fig. 2a le signal d'émission de l'onde au temps t = 0. Le premier écho A (Fig. 2b), le plus intense, arrive au capteur récepteur 14 au bout du temps $T'_{AB}$ . Les échos suivants B, C, ..., N sont dus aux ondes ayant effectué un certain nombre d'allers et retours dans la ligne de mesure.

Un circuit électronique émet, après réglage, deux signaux tout ou rien de durée ajustable, appelés fenêtres, (Fig. 2c). Le système de mesure ne prend en compte que les échos qui apparaissent dans le même temps qu'une fenêtre. L'écho qui apparaît dans la première fenêtre déclenche un chronomètre (Fig. 2d) et l'écho dans la deuxième fenêtre arrête le chronomètre. Sur la Fig. 2, on voit que le déclenchement et l'arrêt du chronomètre sont effectués à partir des échos A et B. Les signaux fenêtres ont donc été positionnés par l'opérateur de part et d'autre de ces échos. Un système de visualisation des échos et des fenêtres est incorporé au dispositif et facilite ainsi le réglage des circuits qui produisent les signaux.

Si la longueur de la ligne de mesure correspondant à la distance entre les zones N et M est L et si v désigne la vitesse du son dans le fluide 11, l'intervalle de temps séparant la réception du premier écho A et, par exemple, du second écho B est :

$$\Delta T = 2T_{NM} = 2 \ L/v.$$

Les variations dans le temps de la valeur $\Delta T$ sont directement liées aux variations de température du fluide 11.

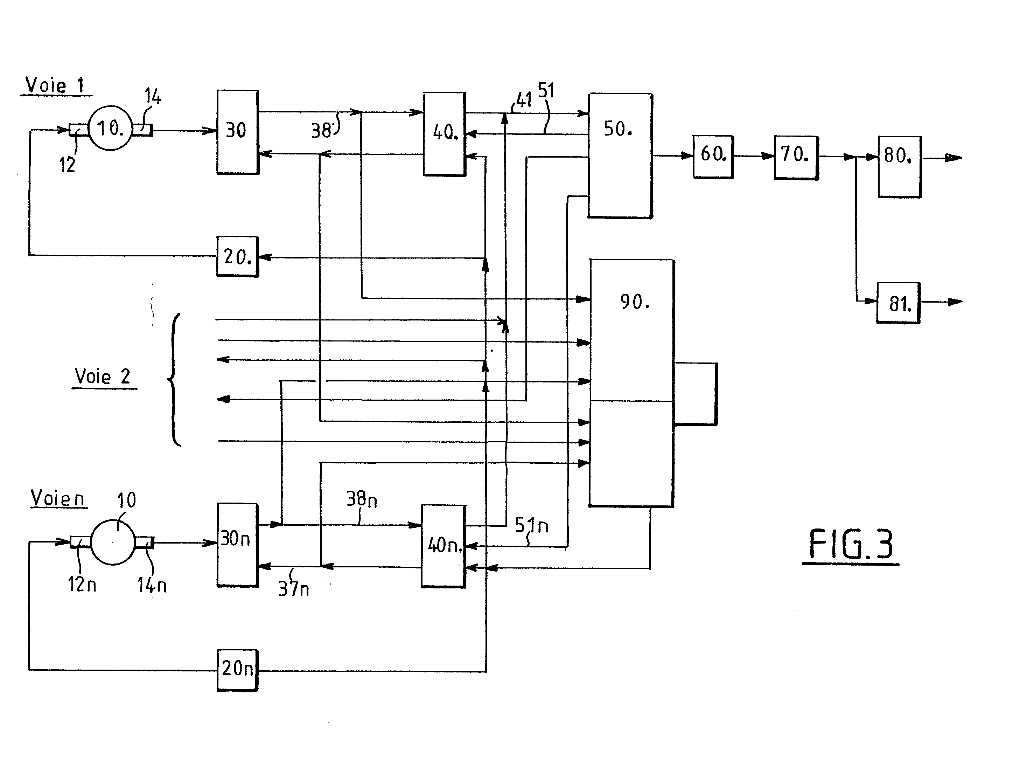

On va se reporter maintenant à la Fig. 3 qui représente le synoptique d'ensemble de traitement pour l'informatique. Le dispositif comprend plusieurs ensembles ou voies de mesures répertoriés de 1 à n. Chaque voie permet la mesure du fluide dans l'enceinte 10. Pour chaque voie, l'entrée 12 de la sonde ultrasonore émettrice est pilotée par un module d'excitation 20 qui se compose d'un générateur d'impulsions.

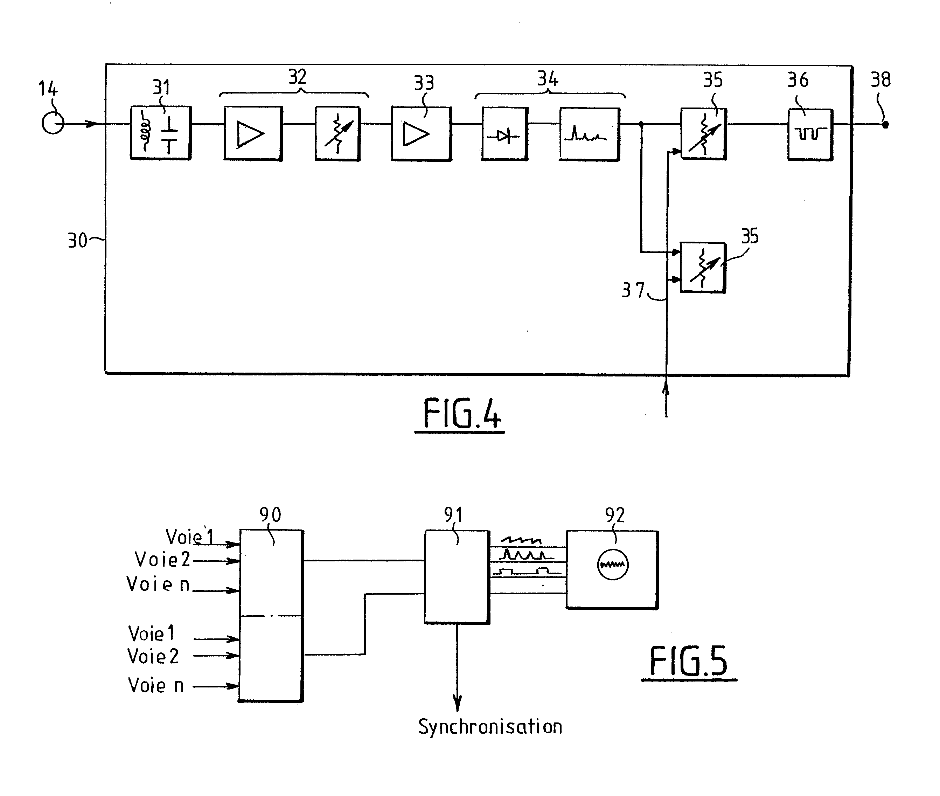

Le circuit de réception comprend, pour chaque voie, un récepteur 14 accordé sur la fréquence d'émission. Les signaux reçus par le récepteur 14 sont amplifiés par un module d'amplification 30. Ce module 30 (Fig. 4) se compose d'un adaptateur d'impédance 31 à la sortie du récepteur 14, d'un premier étage d'amplification 32 avec réglage de gain, d'un deuxième étage d'amplification 33, d'un circuit de redressement d'alternance 34 avec possibilité de rejet, d'un dispositif 35 de réglage du seuil de déclenchement sur écho se trouvant dans la première fenêtre et dans la deuxième fenêtre de mesure, et d'un circuit 36 de mise en forme pour le traitement en logique. L'une des entrées 37 de ce module 30 reçoit les signaux fenêtres qui vont valider les échos retenus. La sortie 38 du circuit de mise en forme transformant le signal écho en signal tout ou rien, est connectée à un module d'acquisition 40 qui est le dispositif de mesure du temps de propagation entre le premier écho de réception et le énième écho choisi.

Le module d'acquisition 40 se compose essentiellement de circuits permettant le positionnement et le réglage des largeurs des deux fenêtres de mesure, d'un circuit de comptage de temps entre fenêtres relié à une horloge fonctionnant à 20 MHz. Un certain nombre de trains d'impulsions correspondant à autant de mesures est stocké dans une mémoire du module 40.

La sortie mesure 41 du module 40 est reliée à une entrée mesure d'un module 50 de gestion interrogation par une liaison parallèle appelée encore bus de liaison. Le module 50 interroge à tour de rôle les modules d'acquisition 40 en émettant un signal d'interrogation 51. Le module de gestion interrogation 50 transmet pour chaque voie, toutes les mesures stockées dans le module d'acquisition 40, vers un module 60.

Ce module 60 calcule la moyenne des mesures ainsi effectuées et délivre vers un module 70 une valeur moyenne du temps entre deux échos pour une voie de mesure. Ce module 70 est une mémoire de stockage avant le transfert vers les modules de calcul 80 et 81. Ces modules de calcul 80 et 81 déterminent à partir du temps ainsi mesuré, de la distance à parcourir dans le fluide par les signaux, la valeur de la température. A titre d'exemple, le module de calcul 80 est un calculateur du commerce et le module de calcul 81 est un calculateur de capacité de stockage plus grande qui permet des calculs en temps différés.

La sortie du module d'amplification 30 est également reliée à une entrée d'un module de traitement 90 (Fig. 3) pour la visualisation des différents signaux avant la mise en forme numérique de ceux-ci. Ce module de traitement 90 reçoit de chaque voie de mesure le signal écho amplifié et traité par le module d'amplification 30 et les signaux tout ou rien correspondant aux fenêtres (Fig. 5). Ces signaux sont commutés manuellement à l'entrée d'un module 91 qui émet des signaux de synchronisation vers le module d'excitation 20 et le module d'acquisition 40. Les différents signaux sont appliqués aux entrées d'un oscilloscope 92 pour permettre de visualiser en temps réel les divers signaux et de régler la position et la durée des signaux fenêtres.

On voit donc que les principaux avantages du procédé suivant l'invention sont de permettre une mesure très facile et très rapide de la température d'un fluide dans une enceinte, en détectant les variations du temps de transit d'une onde ultrasonore se propageant dans une ou plusieurs lignes de mesure, ce qui évite le montage de capteurs ou plongeurs, directement à l'intérieur de l'enceinte, c'est-à-dire directement en contact avec le fluide.

L'invention ne se limite évidemment pas au mode de réalisation qui a été décrit.

C'est ainsi qu'on peut imaginer l'utilisation d'un seul capteur piézoélectrique disposé à l'extérieur de l'enceinte et assurant en même temps l'émission et la réception de l'onde ultrasonore.

L'invention a été décrite surtout dans le cadre de son utilisation dans le cas des réacteurs nucléaires mais il est également possible d'envisager son utilisation dans une installation industrielle quelconque, en particulier dans une installation industrielle complexe et de grandes dimensions telle qu'une raffinerie ou une installation prétrochimique, étant donné que la nature du fluide n'intervient pas sur le fonctionnement du dispositif.

**Revendications**

1.-Procédé de détermination, par mesure du temps de propagation d'une onde ultrasonore, de la température d'un fluide dans une enceinte, procédé selon lequel on émet une onde ultrasonore depuis l'extérieur de l'enceinte et on provoque la propagation de cette onde ultrasonore vers une première partie de la paroi de l'enceinte, puis à travers cette première partie de l'enceinte, et enfin à travers le fluide contenu dans l'enceinte, sur une longueur L, jusqu'au moment où l'onde ultrasonore rencontre une seconde partie de la paroi de l'enceinte disposée en vis-à-vis de la première partie de la paroi, caractérisé par le fait :

-qu'on capte, en un point de captage déterminé, à l'extérieur de l'enceinte, l'onde transmise directement à travers la seconde partie de la paroi,

-qu'on capte, au même point de captage, l'onde transmise à travers la seconde partie de la paroi, après au moins une réflection sur la face interne de la seconde partie de la paroi, une réflection sur la face interne de la première partie de la paroi et plusieurs traversées du fluide entre la première et la seconde parties de la paroi,

-qu'on détermine l'intervalle de temps $\Delta T$ séparant la réception au point de captage de l'onde transmise directement, de la réception au point de captage de l'onde transmise après réflection,

-qu'on déduit la valeur de la température du fluide, de la valeur de l'intervalle $\Delta T$, de la longueur du parcours L dans le fluide et de la connaissance de la variation de la vitesse du son dans le fluide.

2.-Dispositif de mesure de la température d'un fluide dans une enceinte pour la mise en oeuvre du procédé selon la revendication 1, comprenant un capteur piézoélectrique émetteur (12) disposé à l'extérieur de l'enceinte (10) et couplé à un guide d'onde (13), et un circuit d'émission (16) de signaux électriques excitant le capteur piézoélectrique émetteur (12) pour l'émission d'une onde ultrasonore depuis l'extérieur de l'enceinte, caractérisé par le fait qu'il comporte également :

-un capteur piézoélectrique recepteur (14) couplé à un guide d'onde (15) monté sur la paroi extérieure de l'enceinte (10), en face du capteur piézoélectrique émetteur (12),

-un circuit de réception (17) de signaux électriques issus du capteur piézoélectrique récepteur (14) et dus aux ondes ultrasonores transmises par le capteur émetteur (12) à travers l'enceinte (10) et à travers le fluide (11) contenu dans ladite enceinte,

-un calculateur assurant la gestion de l'électronique, l'acquisition et le traitement des données ainsi que l'affichage de la température du fluide (11) contenu dans l'enceinte (10).

3.-Dispositif selon la revendication 2, caractérisé par le fait que le circuit d'émission (16) comporte pour chaque voie de mesure un module d'excitation (20) relié à l'entrée du capteur piézoélectrique émetteur (12).

4.-Dispositif selon la revendication 2, caractérisé par le fait que le circuit de réception (17) comporte pour chaque voie de mesure un module d'amplification (30) dont la sortie est reliée d'une part à un module d'acquisition (40) et d'autre part à un module de traitement (90) pour la visualisation des différents signaux.

5.-Dispositif selon la revendication 4, caractérisé par le fait que le module d'amplification (30) se compose d'un adaptateur d'impédance (31), d'un premier étage d'amplification (32) avec réglage de gain, d'un deuxième étage d'amplification (33), d'un circuit (34) de redressement d'alternance avec possibilité de rejet, d'un dispositif (35) de réglage du seuil de déclenchement sur écho, et d'un circuit (36) de mise en forme des signaux pour le traitement en logique.

6.-Dispositif selon la revendication 4, caractérisé par le fait que, pour chaque voie de mesure, la sortie du module d'acquisition (40) est reliée à une entrée d'un module (50) de gestion interrogation par une liaison parallèle.

FIG.1

FIG.2

Voie 1

Voie 2

Voie n

FIG.3

0 198 732

## FIG.4

## FIG.5

Synchronisation

0 198 732

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 129 130 (UNITED KINGDOM ATOMIC ENERGY AUTHORITY) * Figures 1-3; page 1, lignes 23-34; page 1, ligne 70 - page 2, ligne 51 * | 1,2 | G 01 K 11/24 G 01 K 13/02 |
| Y | GB-A-2 130 368 (UNITED KINGDOM ATOMIC ENERGY AUTHORITY) * Figures 1-3; page 1, lignes 24-51; page 1, ligne 75 - page 2, ligne 99 * | 1,2 | |
| A | GB-A-1 583 746 (EVANS) * Figures 1-3; page 1, ligne 81 - page 2, ligne 26 * | 1,2 | |
| A | US-A-4 065 958 (KRYLOVA et al.) * Figures 1,2; colonne 3, lignes 1-42 * | 2 | DOMAINES TECHNIQUES RECHERCHES (Int. Cl.4) |
| A | US-A-3 392 574 (LEMON et al.) * Figure 3; colonne 3, ligne 45 - colonne 4, ligne 14 * | 5 | G 01 K 11/00 G 01 K 13/00 G 01 N 29/00 G 21 C 17/00 |
| A | SIEMENS FORSCHUNGS- UND ENTWICKLUNGS-BERICHTE, vol. 8, no. 2, 1979, pages 86-91, Springer-Verlag, Berlin, DE; E. VOTAVA: "Prüfung von Reaktorkomponenten mit der Schallemissionsanalyse" * Page 87, figure 2 * | 4 | |

Le présent rapport de recherche a été établi pour toutes les revendications

| Lieu de la recherche | Date d'achèvement de la recherche | Examinateur |
|---|---|---|
| LA HAYE | 25-04-1986 | DRYSDALE N. |